# EUROPEAN PATENT APPLICATION

(11) **EP 4 444 007 A1**
(43) Date of publication of application: **09.10.2024**
(21) Application number: 23167043.1
(22) Date of filing: 06.04.2023
(51) Int. Cl.: H04W 72/0446, H04W 72/23, H04L 1/08

(54) **CONFIGURATION OF MULTIPLE TRANSMISSION OCCASIONS**

(71) Applicant: Panasonic Intellectual Property Corporation of America, Torrance, CA 90504 (US)
(72) Inventor: SHARIATMADARI, Hamidreza, 63225 Langen (DE); SUZUKI, Hidetoshi, Osaka, 571-8501 (JP); YAMAMOTO, Tetsuya, Osaka, 571-8501 (JP)
(74) Representative: Grünecker Patent- und Rechtsanwälte PartG mbB

(57) **Abstract**

Provided are a communication apparatus, a scheduling node, and corresponding communication methods. The communication apparatus comprises a transceiver, which, in operation, receives one or more signals conveying a configuration indicating, for each of one or more time intervals, one or both of a duration and a timing of the time interval, and circuitry, which, in operation, selects, for a transmission, a time resource configured with a direction matching a direction of the transmission within the one or more time intervals. The transceiver, in operation, transmits or receives the transmission on the selected time resource.

## Description

### BACKGROUND

### 1. Technical field

The present disclosure relates to transmission and reception of signals in communication systems, such as 3GPP communication systems. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitate efficient operation of the communication system as well as particular devices pertaining to the system.

### SUMMARY

One non-limiting and exemplary embodiment facilitates efficient handling of configured grant uplink transmissions.

In an embodiment, the techniques disclosed here feature a communication apparatus comprising a transceiver, which, in operation, receives one or more signals conveying a configuration indicating, for each of one or more time intervals, one or both of a duration and a timing of the time interval, and circuitry, which, in operation, selects, for a transmission, a time resource configured with a direction matching a direction of the transmission within the one or more time intervals. The transceiver, in operation, transmits or receives the transmission on the selected time resource.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming scenario;
- **Fig. 6**: is a schematic drawing showing a time pattern of multi-PUSCH configured grant transmission occasions (TOs) within a time period;
- **Fig. 7**: is a schematic drawing illustrating repetition schemes for PUSCH;
- **Fig. 8A**: is a schematic drawing illustrating collided and actual transmission occasions;
- **Fig. 8B**: is a schematic drawing illustrating collided and actual transmission occasions;
- **Fig. 9**: is a block diagram showing a communication apparatus and a scheduling node;
- **Fig. 10**: is a block diagram showing processing circuitry of a communication apparatus;
- **Fig. 11**: is a flow chart showing method steps of a communication method for a communication apparatus;
- **Fig. 12**: is a block diagram showing processing circuitry of a scheduling node;
- **Fig. 13**: is a flow chart showing method steps of a communication method for a scheduling node;

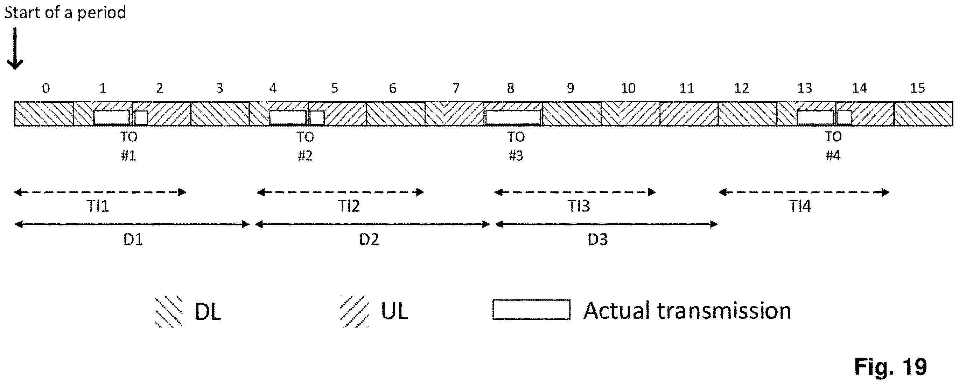

- **Figs. 14-20**: are schematic drawings showing exemplary allocations of transmission occasions within time intervals;
- **Fig. 21**: is a flow chart showing method steps of a communication method for a communication apparatus;
- **Fig. 22**: is a flow chart showing method steps of a communication method for a scheduling node.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

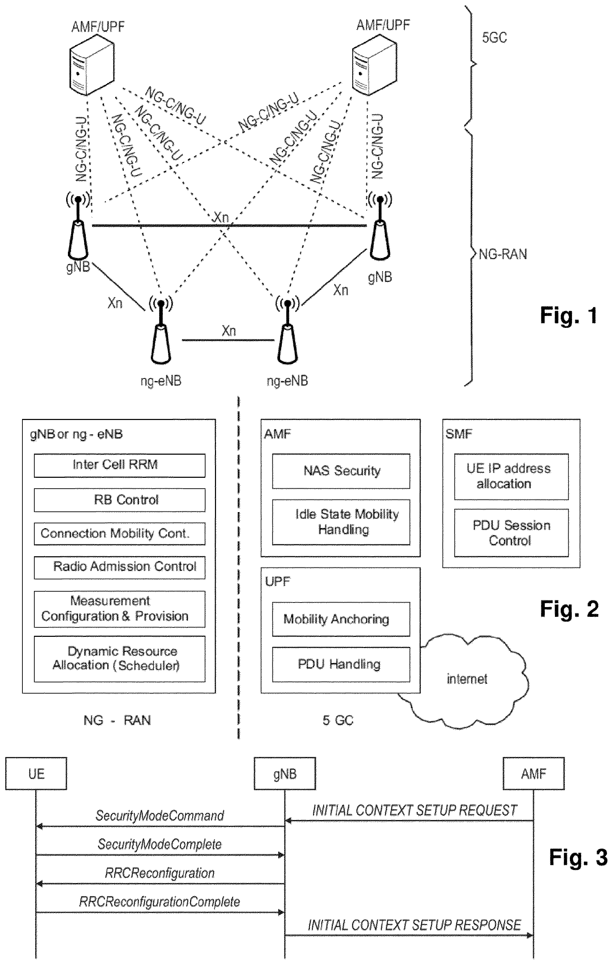

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SOAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0 or e.g. v16.2.0, section 4). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology are summarized in 3GPP TS 38.211, v 15.7.0.

### 5G NR functional split between NG-RAN and 5GC

**Fig. 2** illustrates functional split between NG-RAN and NGC or 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

Fig. 3 illustrates some interactions between a UE, gNB, and AMF (a 5GC entity) in the context of a transition of the UE from RRC_IDLE to RRC_CONNECTED for the NAS part (see e.g. TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### Usage Scenarios of IMT for 2020 and beyond

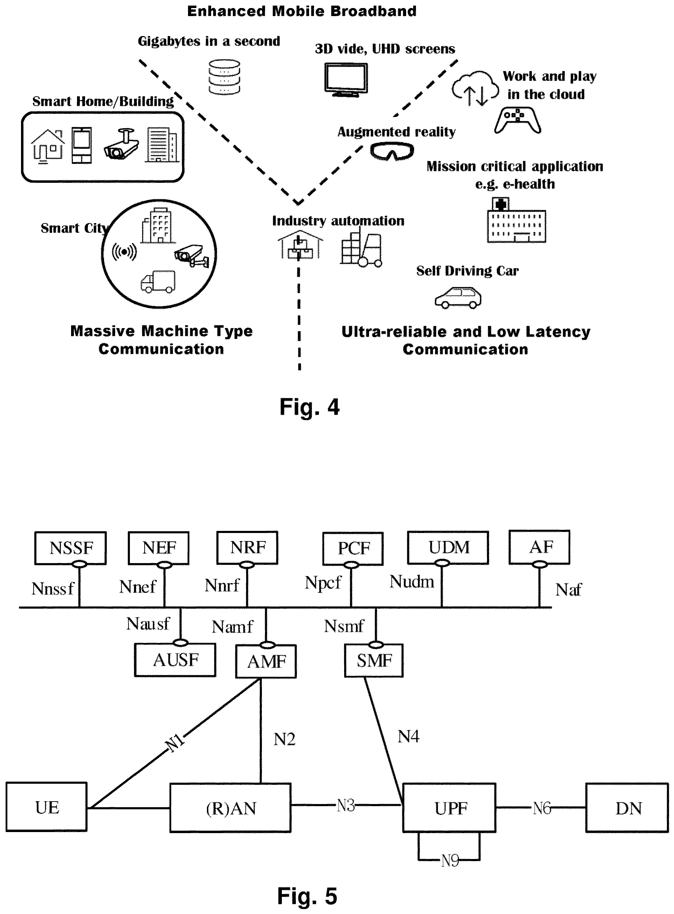

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig. 2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

**Fig. 5** illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a Demodulation Reference Signal (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS). Reference signals may be used at a receiving apparatus for estimating channel characteristics and/or for synchronization. One or more parameters of a reference signal may also be used to transmit data (control or payload) while another one or more parameters of the same reference signal may be used as the reference. For example, a reference signal may be used to compare the received power with the reference power. However, the reference signals may also be used to compare phase and/or frequency or the like.

### Time Intervals

In the present disclosure, time resource units are not limited to one or a combination of slots and symbols, and may be time resource units, such as frames, superframes, subframes, slots, time slot subslots, mini-slots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the described embodiment(s), and may be other numbers of symbols.

### Frequency Bands

The present disclosure may be applied to any of a licensed band and an unlicensed band.. It is applicable for any frequency bands, but may be particularly advantageous for higher frequency bands due to the increasing benefits of beamforming. In particular, frequency bands for 5G NR are separated into two different frequency ranges. First, there is Frequency Range 1 (FR1), which includes sub-6 GHz frequency bands, some of which are traditionally used by previous standards, but have been extended to cover potential new spectrum offerings from 410 MHz to 7125 MHz. The other band is Frequency Range 2 (FR2), which includes frequency bands from 24.25 GHz to 52.6 GHz.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### Physical Resource Block

In general, the term *"physical resource block"* (PRB) refers to the smallest allocable resource unit usable for (user) data transmission. In LTE and NR, a PRB has a predetermined number (e.g. 12) of consecutive subcarriers in frequency domain and a predetermined number of symbols in time domain (e.g. 14 OFDM symbols in LTE).

### Terminology

In the following, UEs, relay nodes, base stations (network nodes), and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the disclosure and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

### Terminal

A ***terminal*** or ***user terminal*** or ***user device*** or ***mobile station*** or ***mobile node*** is referred to in the LTE and NR as a ***user equipment (UE).*** This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the ***base station*** may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node,*** e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

### Extended Reality Applications

As exemplarily shown in **Fig. 4****,** extended reality (XR) applications are considered, including augmented reality (AR), virtual reality (VR), mixed reality (MR), and cloud gaming use cases. To support XR applications while reducing the power consumption and increasing the system capacity, a 3GPPP work item for XR enhancements was approved (cf. 3GPP TSG RAN Meeting #98-e, RP-223502, "XR Enhancements for NR").

Objectives of the work item include specifying enhancements related to power saving, including DRX (discontinuous reception) support of XR frame rates corresponding to non-integer periodicities (through at least semi-static mechanisms e.g. RRC signalling).

Objectives of the work item further include the following enhancements related to capacity.
- Multiple CG PUSCH transmission occasions (TOs) in a period of a single CG PUSCH configuration;
- Dynamic indication of unused CG PUSCH occasion(s) based on UCI by the UE;
- BSR enhancements including at least new BS Table(s);
- Delay reporting of buffered data in uplink;
- Provision of XR traffic assistance information for DL and UL (e.g. periodicity); and
- Discard operation of PDU Sets.

Typically, the XR applications require high data rate in downlink (DL) and uplink (UL) with relatively strict packet delay budget (PDB). In addition, some of XR applications run on devices with a limited source of energy, such as wearable glasses or handheld devices. In this regard, energy efficiency is an important concern. Moreover, XR applications impose a variety of data types, including video streams and pose control traffic.

### Video Stream Traffic Requirements

A video stream may contain video frames with quite large and varying sizes. Regarding packet sizes, for a high quality video stream, the frame size may be around 1M bits after compression for an 8K video. This can lead to having large size packets. Moreover, frame sizes may vary, e.g. due to the structure of the video content or due to some frames being less compressible than other frames. For instance, I-frames (intra-coded pictures), which do not require other frames to decode, may be less compressible than or P-frame/B-frame (predicted or bidirectionally predicted pictures), which require information from the preceding frame (P-frame) or from the preceding and the following frame (B-frames).

Moreover, video stream traffic may typically be characterized as "quasi-periodic", where frames arrive over a time window related to jitter. For instance, the frame packets from a UE/gNB may arrive at the gNB/UE over a time window of [-4, 4] ms or even a larger time window.

Regarding periodicities, an exemplary video stream generates 60, 90, or 120 fps (frames per second), which correspond to a periodicity of 16.667 ms, 11.111 ms, and 8.333 ms, respectively. Accordingly, the periodicity of the time window may be non-integer.

It should be further noted that the delay budget for delivering the XR packets could be tight, for instance, 10 ms for AR/VR or 15 ms for cloud gaming.

### Configured Grant

A UE may be configured for uplink transmission on the PUSCH without having to receive individual resource allocations on the PDCCH for periodic transmission on a specific set of resource blocks. This is referred to as "configured grant" (CG) resource allocation or "grant free" resource allocation. In 3GPP NR, the following two types of CG have been specified within Release 15.

On the one hand, Type 1 configured grants are fully configured by RRC using RRC signaling and do not require PDCCH (layer 1) signaling. A Type 1 CG remains valid until further RRC signaling reconfigures the CG.

On the other hand, Type 2 configured grants are configured using a combination of RRC signaling and PDCCH signaling. A subset of the resource allocation is provided by the RRC signaling, whereas the PDCCH may provide the remaining resource allocation information and also acts as an activation trigger, deactivation trigger, or reactivation trigger for the PUSCH transmissions.

One issue of possible consideration is the determination of the time domain resource allocation of the CG PUSCHs associated to a multi-PUSCHs CG (see 3GPPP document R1-2301903, "Moderator Summary#4 (Final) - XR Specific Capacity Improvements"). The following alternatives for determining the PUSCH transmission occasions (TOs) may be considered. As a first alternative, time domain resource allocation may be based on a repetition framework. Therein, a first option is to follow the time domain mapping of Type A repetition. Therein, a number N of consecutive slots with PUSCH is configured by higher layers (e.g. RRC) or indicated by an activation DCI. A single SLIV (a so-called "start and length indicator value" used to deduce both the resource allocation starting symbol and the number of consecutive symbols belonging to the resource allocation) is determined from time domain resource allocation. The same SLIV is applied in N PUSCH in consecutive slot per CG period. The time domain resource allocation for PUSCHs in non-consecutive slots in the first option of the first alternative is an issue for possible study.

A second option within the first alternative is to follow the time domain resource allocation of Type B repetition. Therein, a single SLIV is determined from time domain resource allocation. The SLIV is used for the first PUSCH per CG period. There are N consecutive nominal PUSCHs per CG period, with N configured by higher layers or indicated by an activation DCI. It is noted that N is not necessarily the repetition factor.

As a second alternative, the time domain resource allocation may be based on the framework from NR unlicensed spectrum (NR-U). Therein, a single SLIV is determined from time domain resource allocation. The SLIV is used for the first PUSCH per CG period. M consecutive PUSCH TOs are configured with the same duration in slot. The M PUSCH TOs are used in N consecutive slots per CG period. N and M are configured by higher layers and independently from *cg-nrofSlots-r16* and *cg-nrofPUSCH-InSlot-r16,* respectively. M and N configurations are independent from *cgRetransmissionTimer* configuration. "cg-RetransmissionTimer" refers to a timer also used in NR-U communication that is re-set when the UE has successfully transmitted a CG PUSCH transmission.

As a third alternative, time domain resource allocation is based on a single DCI scheduling multiple PUSCHs. A first option within the third alternative is to follow the Release 16 single DCI scheduling multiple PUSCHs. The time domain resource allocation is configured by pusch-TimeDomainAllocationListForMultPUSCH-r16 with extendedK2-r16. A row of time domain resource allocation with N entries determines the time domain resources allocation of N PUSCH TOs per period. In the first option, N PUSCH TOs should be consecutive PUSCH TOs in consecutive slots.

A second option within the third alternative is to follow the Release 17 single DCI scheduling multiple PUSCHs. The time domain resource allocation is configured by pusch-TimeDomainAllocationListForMultPUSCH-r16 with extendedK2-r17. A row of time domain resource allocation with N entries determines the time domain resources allocation of N PUSCH TOs per period. In the second option, N PUSCH TOs can be non-consecutive PUSCHs and/or in non-consecutive slots.

It is noted that in the above-described alternatives for time domain resource allocation, issues for further study include the related RRC parameters.

### Further modifications

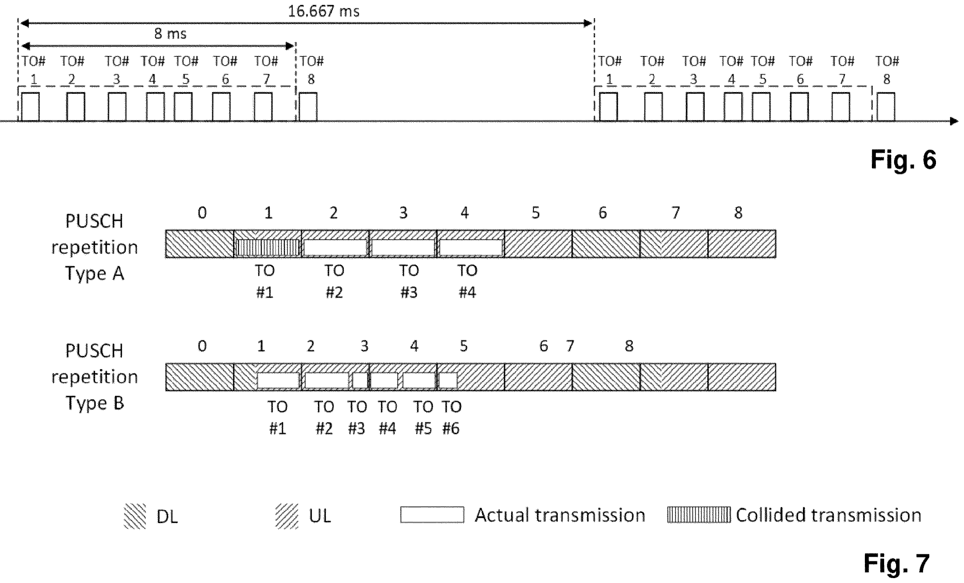

The inventors have considered the possibility of configuring a CG with multi-PUSCHs to deliver video frames on the uplink, e.g. XR video frames. In an example shown in **Fig. 6****,** a multi-PUSCHs CG with 8 transmission occasions (TOs) per period is configured to deliver XR video traffic with 60 fps corresponding to a period of 16. 667 ms. Moreover, uneven time delays between consecutive TOs are considered, e.g. a time interval or difference between TO#5 and TO#4 being smaller than a time difference between TO#2 and TO#1. In Fig. 6, an 8 ms jitter window is shown within which a frame arrives. It is noted that the TOs are configured such that when a frame arrives, the next TO is used for the transmission. If a frame arrives at the end of the frame, TO#8, which is outside jitter window, can be used.

Moreover, the above-mentioned repetition schemes, Type A and Type B, support PUSCH transmissions over consecutive slots or mini-slots. For PUSCH repetition Type A, as shown in **Fig. 7** in the top part, only a single transmission can be performed in each slot. The PUSCH repetition Type B shown in **Fig. 7** in the bottom part allows having more than one transmission in a slot. In addition, a transmission can be segmented, e.g., due to the slot boundary. As a result, the number of actual transmissions may be more than the configured number of repetitions.

It is noted that in the top half of Fig. 7, the first of four subsequent TOs collides with a flexible slot, in which the symbols may be used for both the downlink and the uplink. In **Fig. 7** as well as in other figures of the present disclosure, flexible slots are illustrated by a combination of the patters used for downlink and uplink in a single slot.

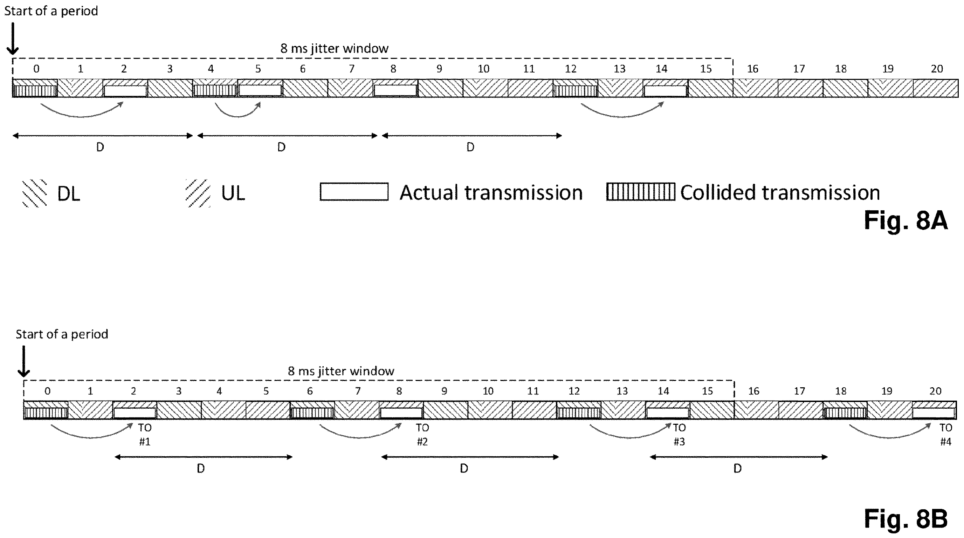

For some application including the above-mentioned XR traffic such as video frames, it may be desirable to have TOs in non-consecutive slots or mini-slots, which are spread over a frame arrival jitter window. In an example shown in **Figures 8A** and **8B****,** it is assumed that a UE is generating XR video traffic at a rate of 60 fps (frames per second). The UE is configured with a multi-PUSCHs CG with 4 TOs. A 3-slot time offset between two consecutive TOs is considered. It is assumed that a TO requires 14 UL symbols, i.e., a TO is performed only over an UL slot. The UE is indicated with the start of the period.

In **Fig. 8A****,** the UE first determines all TOs based on the 3-slot delay. For each of the scheduled TOs, the UE determines if the TO collides with DL or Flexible slots. In case of collision, as shown, an approach is to postpone the actual TO until the next available UL slot. However, with such an approach, the relative time offsets between the actual TOs with actual transmissions may vary a lot (there is 2-slot time delay between TO#1 and TO#2, while there is 5-slot time delay between TO#3 and TO#4).

In an approach shown in **Fig. 8B****,** the UE determines the actual TO individually considering the defined delay offset (3 slots in this example) from the last actual transmission. If there is a collision between the intended TO and an UL or Flexible slot, the transmission is postponed to the earliest UL slot. However, when taking such an approach, the TOs may shift a lot, resulting in having several transmission occasions with short delays and/or not be aligned with the frame jitter arrival.

### Embodiments

In view of this, the inventors have identified a possibility of configuring the UE with time intervals (TIs) for multi-transmissions (for the same or different transport block, TB) in UUDL. Each transmission occasion is determined according to each TI. In general, the multi-transmissions can be utilized for DG or CG UL (dynamic grant / configured grant) and DG/SPS DL.

The present disclosure in particular provides scheduling devices or scheduling apparatuses (such as scheduling nodes), corresponding methods for scheduling devices, communication devices or communication apparatuses (e.g. adapted/configured to perform the function of a communication terminal in a communication system), corresponding methods and (computer) programs (e.g. stored on a memory) for communication devices, communications systems comprising such scheduling devices and communication devices, as well as integrated circuits which, in operation, control a processes of scheduling devices/communication devices to perform the respective methods.

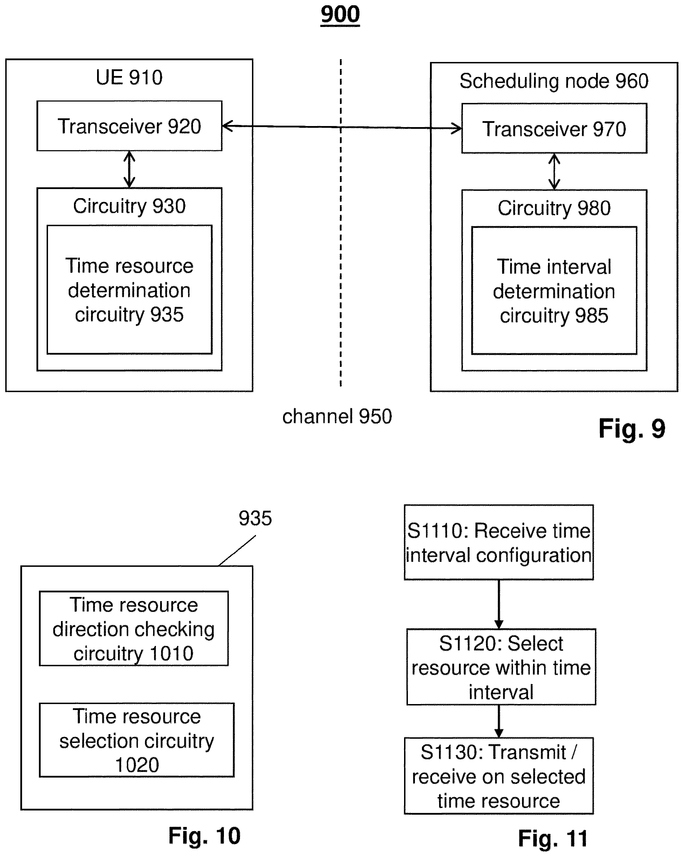

An example of such communication system is illustrated in **Fig. 9****.** The communication system 900 may be a wireless communication system in accordance with the technical specifications of 5G, in particular a NR communication system. However, the present disclosure is not limited to 3GPP NR terrestrial networks (TN) and may also be applied to NTNs or other wireless or cellular systems.

**Fig. 9** illustrates a general, simplified and exemplary block diagram of a communication apparatus 910 (here assumed to be a user equipment (UE) or communication terminal) and a scheduling device 960 or scheduling node (here exemplarily assumed to be located in a base station, e.g. in a LTE eNB (alternatively termed ng-eNB) or the gNB in 5G NR). However, in general, a scheduling device may also be a terminal in case of a sidelink connection between two terminals. Moreover, in particular with respect to the use cases of URLLC; eMBB, and mMTC, the communication device 810 may also be a sensor device, a wearable device, or a connected vehicle, or a controller of an automated machine in an industrial factory.

As illustrated in **Fig. 9****,** the communication device 910 and the scheduling device 960 (eNB/gNB) may communicate with each other over a (wireless) physical channel 950 respectively using their transceivers 920 (communication terminal side) and 970 (base station side). Together, the scheduling device 960 and the communication apparatus 910 form the communication system 900. The communication system 900 may further include other entities such as those shown in Fig. 1 and, e.g. a plurality of UEs connected to the scheduling node or a relay node relaying signals to/from the base station from/to one or more UEs.

### Transceiver & Circuitry

As illustrated in **Fig. 9** (left-hand side), the communication device may comprise a transceiver and circuitry (or processing circuitry), and the scheduling device may comprise a transceiver and a (processing) circuitry.

The term "***transceiver***" refers to a front end including on or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term "*transceiver*" is used for hardware and software components that allow a communication device to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term "***circuitry***" herein refers to any hardware and/or software. For example the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

According to an exemplary embodiment, a communication apparatus 910 as e.g. illustrated in **Fig. 9** (left-hand side) is provided. The communication apparatus comprises a transceiver 920 and circuitry 930. The transceiver, in operation, receives one or more signals conveying a configuration indicating, for each of one or more time intervals, one or both of a duration and a timing of the time interval. The circuitry 930, in operation, selects, for a transmission, a time resource configured with a direction matching a direction of the transmission within the one or more time intervals. The transceiver 920, in operation, transmits or receives the transmission on the selected time resource.

The circuitry 930 (also denoted "UE circuitry" for short) is exemplarily considered to include time resource determination circuitry 935, which selects a time resource for transmission. **Fig. 10** shows an exemplary structure of time resource determination circuitry 935. As shown, the time resource determination circuitry 935 may include time resource direction checking circuitry 1010, which may be responsible for determining which time resources within a configured time interval match the direction of the transmission, and time resource selection circuitry 1020, which may be responsible for selecting a time resource with a matching direction. It is, however, noted that the circuitries 930, 935, 1010, and 1020 may implement more functionality than the above-mentioned HP ID processing and assignment, and the functionalities mentioned above are in general implemented by circuitry 930 without being limited to the respective circuitries 935, 1010 and 1020 described above.

In correspondence with the above-described communication apparatus 910, a communication method to be performed by a communication apparatus 910 is provided. As shown in **Fig. 11****,** the communication apparatus comprises a step S1110 of receiving one or more signals conveying a configuration indicating, for each of one or more time intervals, one or both of a duration and a timing of the time interval, a step S1120 of selecting, for a transmission, a time resource configured with a direction matching a direction of the transmission within the one or more time intervals, and a step S1130 of transmitting or receiving the transmission on the selected time resource.

Also provided is a scheduling node 960 or scheduling apparatus, which is shown in **Fig. 9** (right-hand side). The scheduling node 960 comprises a transceiver 970 and circuitry 980. The circuitry 980, in operation, determines a configuration indicating, for one or more time intervals, one or both of a duration and a timing of the time interval. The transceiver 970, in operation, transmits one or more signals conveying the configuration and receives or transmits a transmission on a time resource configured with a direction matching a direction of the transmission within the one or more time intervals.

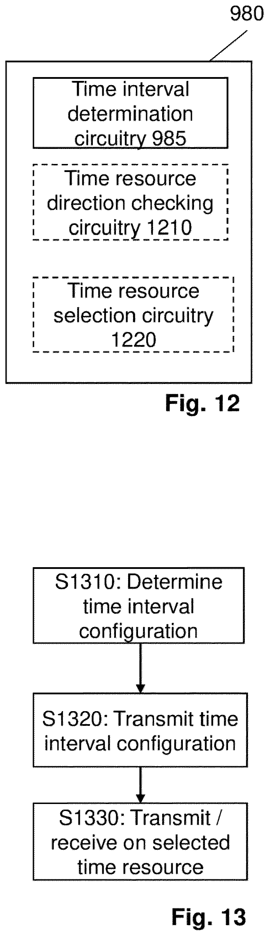

As illustrated in **Fig. 9** as well as in **Fig. 12****,** exemplary circuitry 980 of a scheduling node (also denoted "gNB circuitry" for short) comprises time resource determination circuitry 985, which may be responsible for determining a configuration indicating a duration and / or a timing of the one or more time intervals. In addition, as shown in **Fig. 12****,** the gNB circuitry my include time resource direction checking circuitry 1210 and time resource selection circuitry for determining the time resource on which the transmission is to be transmitted or received in accordance with the selection made by UE 910. However, also for the scheduling node 960, it is noted that circuitries 980, 985, 1210 and 1220 may implement more functionality than the above-mentioned processing, and the functionalities mentioned above are in general implemented by circuitry 980 without being limited to the respective circuitries 985, 1010 or 1020.

In correspondence with scheduling node 960, further provided is a communication method to be performed by a scheduling node. The communication method includes a steps 1310 of determining, a configuration indicating, for one or more time intervals, one or both of a duration and a timing of the time interval, a step S1320 of transmitting one or more signals conveying the configuration, and a step S1330 of receiving or transmitting a transmission on a time resource configured with a direction matching a direction of the transmission within the one or more time intervals.

In the description of apparatuses and methods as provided above, "one or more signals" refers to control signaling including dynamic signaling on a physical channel (e.g. a DCI / PSCCH) and /or semi-static signaling on a higher layer such as RRC signaling. For instance, the one or more signals may include a Type 1 or Type 2 CG configuration or a dynamic grant. Moreover, a time resource may be selected for a single transmission, a plurality of transmissions e.g. of a CG time pattern (or SPS (semi-persistent scheduling) pattern) or a plurality of transmission occasions available for one or more transmissions. "Receiving the transmission" (or the transmissions) may correspond to receiving a transmission on each of time resources selected as TOs or monitoring the selected time resource or resources for a transmission. For instance, one time resource per configured time interval is selected.

The duration (or length) of the configured time interval as well as the timing may be indicated in terms of slots, where the timing may be provided relative to other time intervals, e.g. as a delay, time/slot difference or number of slots between time intervals.

The first TI in time order may be assumed to begin at a start of a period of the CG, or an offset with respect to the start of the period may be configured.

In each of one or more configured time intervals for which the duration (e.g. length in slots), a time resource for a transmission or for a transmission occasion may be selected. A time resource may correspond to one or more slots or a required number of symbols within one or more slots.

The direction of a transmission may be uplink or downlink. Accordingly, the UE may check for each time interval identified from the received configuration whether the resource includes a time resource matching a direction of the transmission, e.g. a slot configured for uplink a sufficient number of symbols in one or more uplink and/or flexible slots if the transmission direction is uplink (and in an analogous manner, a slot or symbols configured downlink if the transmission direction is downlink).

However, it may occur that a time resource matching the direction (as well as the data size) of the transmission is not available in a slot. Therefore, the communication apparatus 910 may determine, using circuitry 930, for each of the one or more intervals, if there is a resource available matching the required transmission direction is available. If yes, the transmission is received or transmitted on a selected one of the resources in the time interval. If not, the communication apparatus, e.g. using circuitry 820, may discard /drop the transmission or postpone the transmission.

Furthermore, selection of a time resource or time resources for transmission(s) may be performed by both the communication apparatus 810 and the scheduling node 860 in the same manner using the same rules for selection, to achieve agreement on the time resource(s) in the one or more transmission intervals where the transmission is actually made.

### Duration and time difference

In some embodiments, the UE is configured with the durations of TIs and time delays (e.g. time differences) between TIs. Within each TI, the first available slot/mini-slot is selected for the TO.

For instance, the multi-transmissions are configured with the durations of the TIs and time delays between the beginnings of TIs. Within each TI, a predetermined available time resource (e.g. the earliest or latest available slot/mini-slot in time order), meeting the TO's transmission requirements and direction), is used for the TO.

The configuration received by the communication apparatus 910 from the scheduling node 960 may indicate, for each of the one or more time intervals, the duration of the time interval and, a time difference (or delay) between the beginnings of consecutive time intervals. Here, the beginnings of consecutive time intervals are an exemplary indication of the above-mentioned timing.

The UE determines the earliest or latest available slot/mini-slot for an UL or DL TO, depending on the direction of the transmission, within each TI.

In case there is no available slot/mini-slot within a TI meeting the TO's requirements (e.g., having the minimum number of REs/symbols for the transmissions), the TO is dropped (e.g. canceled) and possibly delayed to another time interval or period of the CG.

Alternatively, the TI may be further extended, for instance, for a configured duration (set by RRC), until the beginning of the next TI, or for the unlimited amount of time.

Instead of time differences between beginnings of slots, time differences between endings may be indicated as timings, or a time difference (e.g. number of slots between) the ending of the preceding TI and the beginning of the next subsequent TI.

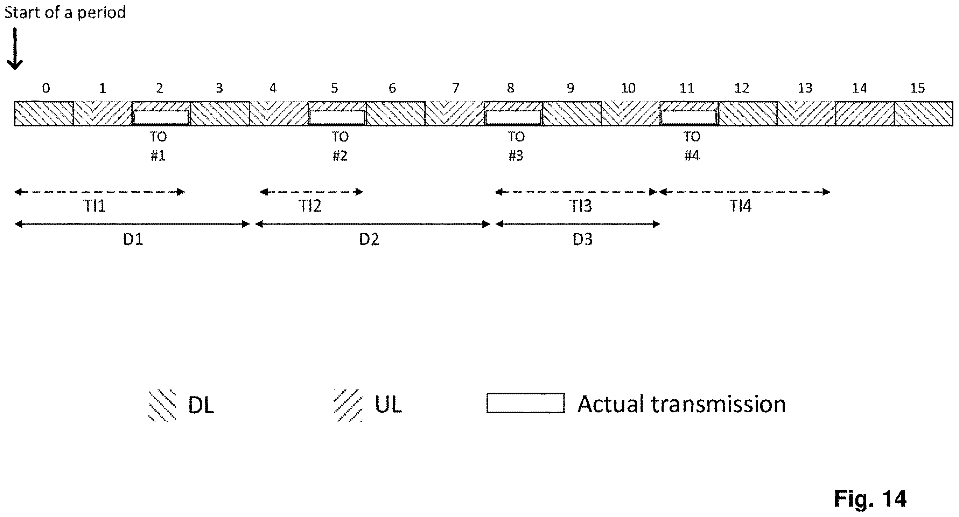

An example shown in **Fig. 14** considers multi-transmissions for multi-PUSCH CG. As shown, a UE is configured with a multi-PUSCHs CG with 4 TIs. The durations of the TIs are 3, 2, 3, 3 slots. For instance, the UE is configured to select the earliest available slot for PUSCH TO within each Tl. In this example of PUSCH CG, the transmission direction is the uplink, and available slots are those configured as uplink slots.

For the first Tl, the first and second slots collide with DL and Flexible slots, respectively. Slot 3 is selected for the TO#1. In the second Tl, the first slot (slot 4) collides with a Flexible slot, and the PUSCH TO is postponed to the next available UL slot (slot 5) as the slot selected for the transmission. For the third Tl, the first slot (slot 8) is available, and the slot is selected as a TO#3. For the fourth Tl, the first slot (slot 11) in the TI is selected for TO#4.

The lengths / durations and/or delays / differences may be indicated by RRC in the CG configuration. Optionally, the lengths of TIs may also be indicated dynamically, e.g. by a DCI (re)activation.

It is noted that in in the present disclosure, indicating a duration does not necessarily imply indications of respective values for the durations of different time intervals.

Optionally, a single value could be set for all the lengths of TIs: In some embodiments, the configuration indicates single duration applicable to all of the one or more time intervals.

Furthermore, the TIs may also be configured to overlap with one another. For the overlapping TIs, the slot/mini-slot selected for a TO of a TI becomes unavailable for other TIs.

Priorities may be defined for the TIs, and a TI with the higher priority may selects a TO before a TI with a lower priority.

In some embodiments, the one or more time intervals are a plurality of time intervals including a first time interval and a second time interval, and as mentioned the configuration indicates priorities for the plurality of time intervals. the first time interval having a higher priority and overlapping with the second time interval, and the UE circuitry 830, in operation, selects the time resource for the transmission among all available resources within the first time interval before selecting another time resource for another transmission among resources within the second time interval remaining after selection of said time resource within the first time interval (it is noted that the gNB circuitry may select or determine the time resource in the manner to identify the time resource selected by the UE 810).

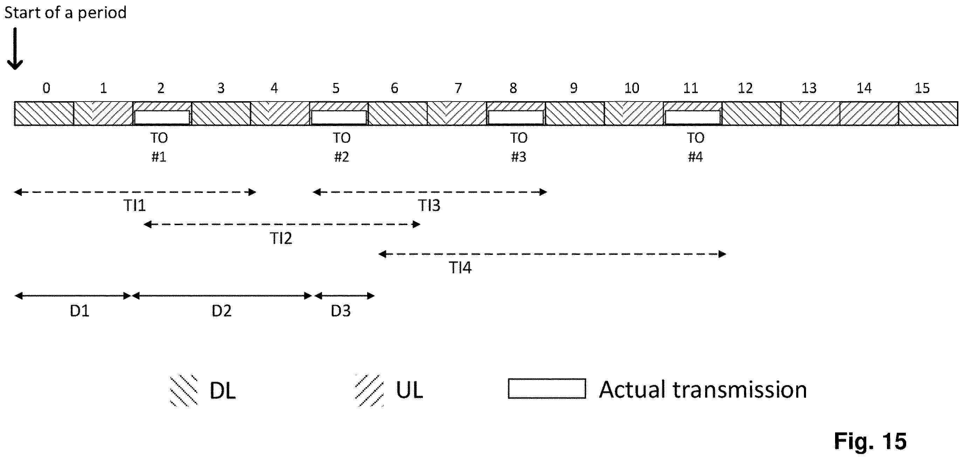

In an example shown in **Fig. 15****,** 4 overlapping TIs are defined. In TI1, slot 2 is selected for TO#1. The slot 2 therefore becomes unavailable for the later TIs, in particular TI2 overlapping with TI1. In TI2, slot 5 is selected for TO#2. In TI3, slot 8 is selected for TO#3. In TI4, the earliest available slot is 11 that is selected for the TO#4 (after slot 8 has already been selected for another TI).

It is noted that the priorities need not necessarily be signaled. Priorities may e.g. be implicitly indicated and/or derived according to rules, e.g. based on a time order of the TIs (as shown in **Fig. 15**) or based on a type of data, e.g. sensitive data or control data.

With the configuration of a duration and a time difference / delay in accordance with the embodiments disclosed above and also in the embodiments yet to be described, the present disclosure allows for the gNB to configure TIs in a manner to facilitate obtaining PUSCH TOs over non-consecutive slots/mini-slots. The actual PUSCH TO is determined within a TI. Moreover in case of collisions with DL slots, later TOs (e.g. in different TIs) are not affected.

### Subsets of available slots

In some embodiments, the configuration indicates, in addition to the above-described duration(s) and possibly timing(s), a subset of time resources among all time resources within the one or more time intervals, and the circuitry (UE circuitry 830 and accordingly, the gNB circuitry 880), in operation, selects the time resource for the transmission from the subset.

A TO may be selected from a subset of resources, e.g. slots or mini-slots, within a time interval, or a subset of available (mini-)slots / resources in the time interval. The TO within a TI is derived from a subset of available slots/min-slots, e.g. considering the defined priorities.

In addition, subsets may be configured according to defined priorities or orders. For instance, a CG PUSCH having a higher priority may be configured to select the TO from all slots in the time interval (or from a larger subset comprising a greater number of slots), and a CG PUSCH (or DG PUSCH etc.) having a lower priority may be configured a smaller subset than the subset available for the higher priority transmission.

Further or alternatively, the different priorities may be defined for different physical channels. For instance, a higher priority is set for a CG PUSCH and a lower priority is set for DG PUSCH. In such a case, UE initially may, for instance, initially try to carry the data using CG PUSCH (or more generally a first physical channel) within a TI, if there is no time resource available for TO, the data may be carried by a DG PUSCH.

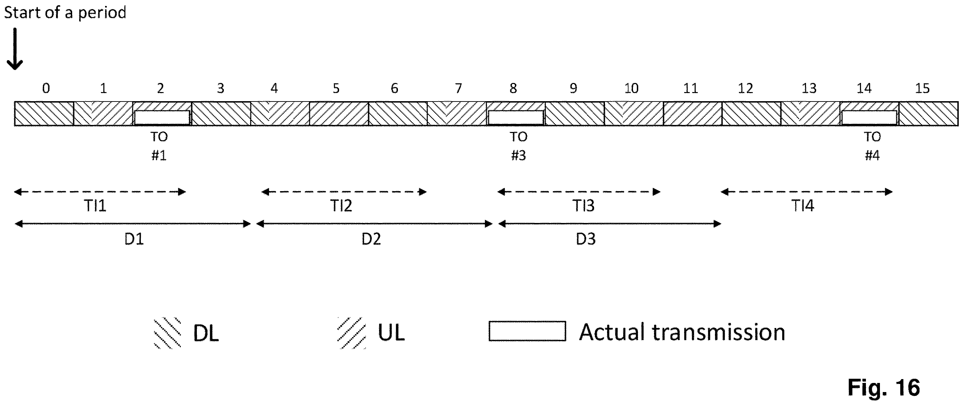

An example is shown in **Fig. 16****,** where the lengths of TIs are 3 slots. However, the UE can only select the first or third slots as a subset within a TI for a PUSCH TO. For TI1, TI3, and TI4, there are available UL slots for PUSCH TOs. For the TI2, there is no UL slot among the first or third slots. So, the PUSCH TO for TI3 is dropped.

Further, elements of a subset can be assigned with the priorities, e.g. the first slot having a higher priority than the third slot.

Enabling configuration of subsets of TIs, possibly combined with priorities, allows for the gNB to assign only few slots/mini-slots within a TI.

### Aligned time intervals

As an alternative to explicitly indicating a time difference between beginnings of consecutive time intervals, the configuration may indicate, for each two consecutive time intervals of the one or more time intervals, a time difference between the beginnings of the time intervals as an indication of the duration (or length) of the preceding time interval.

A TI can be considered to end at the beginning of the next (or subsequent or (directly) consecutive) TI.

For the last configured TI in time order, for which there is no other TI after the TI within the same period or time pattern of a CG, the following options may be considered:
- The end of a TI is the next slot or mini-slot, hence, the TO is performed if the slot or mini-slot is available for UL transmission (e.g., the duration of the last TI is taken as one slot).
- The end of the TI is the beginning of the next CG period or the beginning of a TI of another CG configuration.
- The length of the TI is a configured value (e.g., set by RRC).
- The end of the TI is the end of the next UL slot (which allows the last TI to have at least one UL slot available for selection if the transmission direction is UL) or DL (if the transmission direction is DL.
- The length of the last TI is included in the configuration. Since the time differences are considered to correspond to the TI lengths, this corresponds to signaling lengths for all TIs.

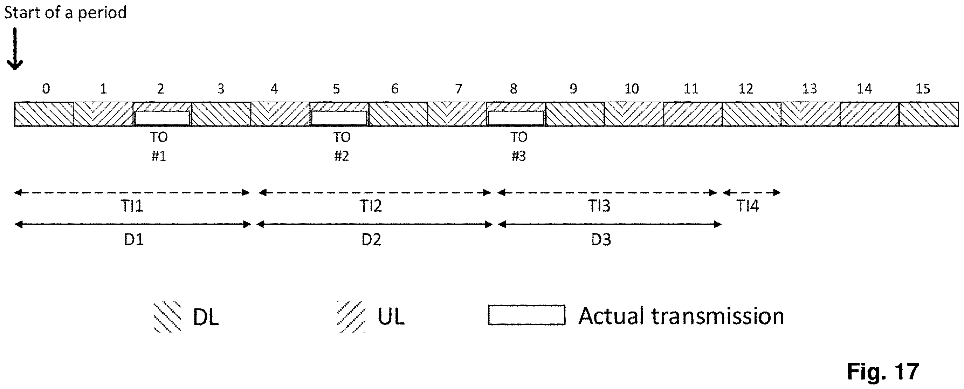

In an example shown in **Fig. 17****,** the UE is configured with a multi-PUSCHs with 4 TIs. For the first three TIs, the end of the TI is aligned with the beginning of the next TI. For the last TI, the length of a TI is 1 slot. There is no available UL slot within the fourth TI, so the fourth PUSCH TO is dropped.

When aligning the end of a preceding TI with the beginning of a subsequent TI, there is no need to define the lengths of TIs, which can reduce the overhead signaling. On the other hand, signaling both the duration and the explicitly, as described above, may facilitate providing minimum time gaps between TOs and thus adjusting the slot positions of TOs more precisely.

### Slot boundary crossing o discontinuous transmission

In a case where slot boundary crossing and/or discontinuous transmission are allowed for a transmission, the UE may determine one or more than one TO, meeting the required resource allocations, within a TI.

For instance the UE circuitry 830 (as well as gNB circuitry 880) may select the time resource for the transmission to comprise one or more symbols in a first slot and one or more symbols in a second slot within a time interval of the one or more time intervals.

Accordingly, the time resource for the transmission may comprise a first TO including symbols in one slot and a second TO including symbols in another slot, and the total number of symbols satisfies the required number of symbols or Res for the transmission.

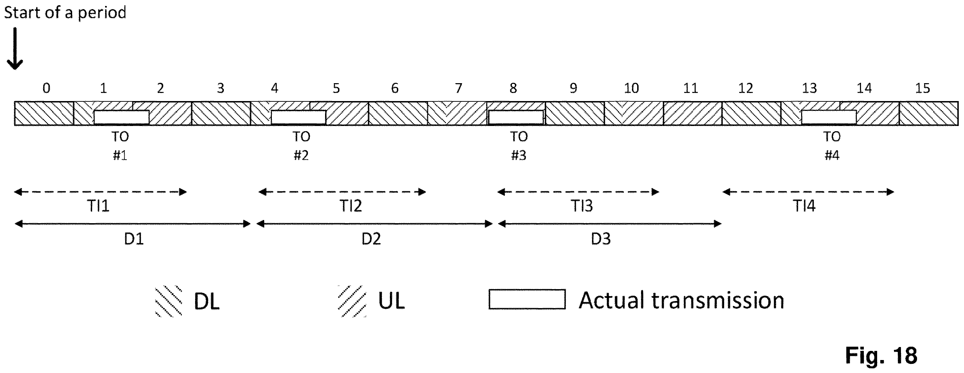

In an example shown in **Fig. 18****,** a PUSCH TO requires 14 symbols. The UE can perform the UL transmissions with the slot boundary crossing. Over slot 1 and slot 13, which are flexible slots comprising both uplink and downlink configured symbols, less than 14 symbols are available for UL. Therefore, the UE extends the TO transmission over the next consecutive slots.

In an example shown in **Fig. 18****,** a PUSCH TO requires 14 symbols. The UE can perform the UL transmissions with discontinuous transmissions. Over slot 1 and slot 13, which are flexible slots comprising both uplink and downlink configured symbols, less than 14 symbols are available for UL. Therefore, the UE extends the TO transmission over the next consecutive slots.

It is noted that the first slot and the second slot may be arbitrary slots within the time interval (or within a subset of the TI if such a subset is configured as described above) having available symbols matching the direction of transmission and are not limited to directly consecutive slots.

### Reduced number of REs / symbols

In some embodiments, the configuration indicates, for the transmission, a minimum number of resource elements (or an allowed range between a minimum and a maximum number of resource elements) or symbols available for allocation of the transmission, and the UE circuitry 830, in operation, selects a time resource satisfying the at least one of the minimum number or maximum number of REs or symbols within the one or more time intervals.

A UE may be configured to transmit/receive a TO with a reduced number of resource elements (REs).

For instance, some conditions may be defined for the UE to perform the TO with a reduced number of REs, e.g. a minimum number of REs/symbols. In addition, the TO with a reduced number of REs may have a different communication characteristics, such as, using a higher MCS or lower TB size.

The UE circuitry may adapt or adjust a modulation and coding scheme or a transport block size to the selected time resource satisfying the indicated minimum number (and/or, if also configured, the maximum number) of resource elements or symbols.

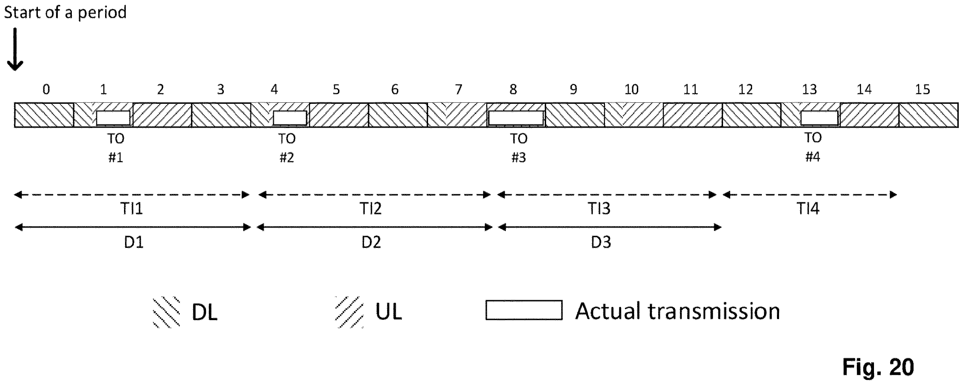

In an example shown in **Fig. 20****,** a PUSCH TO is configured with 14 UL symbols. However, the UE is capable of transmitting a PUSCH TO with a reduced number of REs, when less than 14 UL symbols are available in a slot, e.g. by adapting the MCS, TB size etc. In the example shown, transmissions on TO#1, TO#2, and TO#4 are transmitted with a reduced number of REs (less than 14 symbols) over flexible slots.

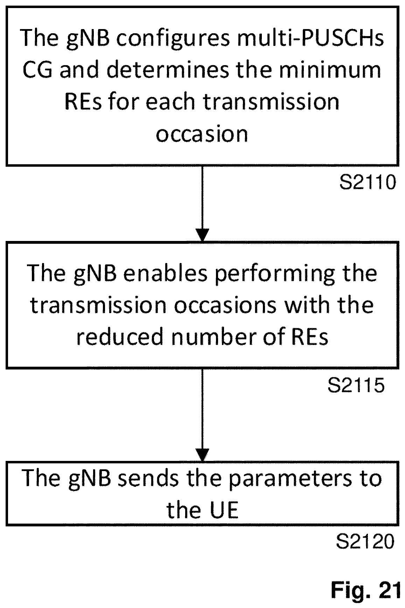

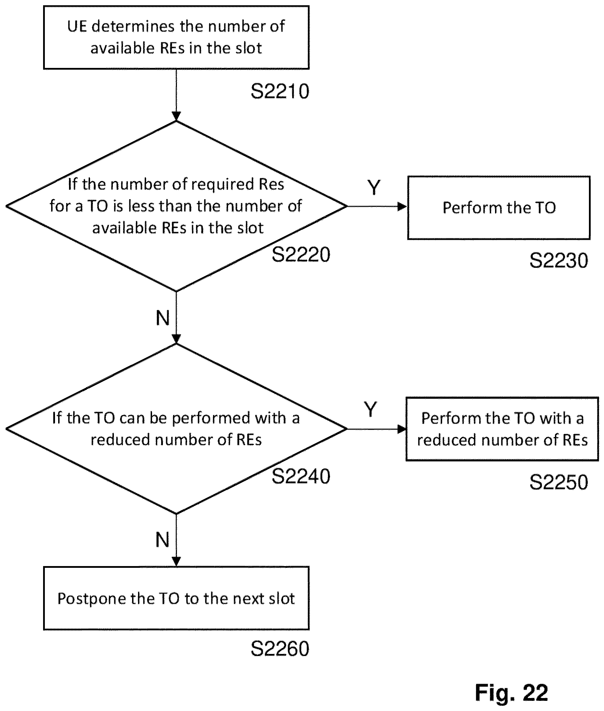

**Figures 21** **and** **22** show flowcharts for the gNB (**Fig. 21**) and for the UE (**Fig. 22**) for setting the TI and associated transmission requirements, and a UE performing the TO with a reduced number of REs.

**Fig. 21** shows a step S2110 of configuring multi-PUSCHs CG and determining the minimum number of REs for each transmission occasion of the multi-PUSCHs CG, and a step of enabling performing the transmission on the transmission occasions with the reduced number of REs. Steps S2110 and S2120 define the gNB determining a configuration including a minimum number of REs required and possibly determining allowed MCSs and TB sizes for the transmission. In step S2110, the gNB sends the parameters to the UE (e.g. as part of the configuration conveyed in the above-mentioned "one or more signals" which are sent in step S1320 of Fig. 13).

As shown in **Fig. 22****,** the UE, in step S2210, determines the number of available REs in a slot, and determine in step S2220 whether the number of required REs for the transmission is less than the number of available slots in the TO. If yes, the UE performs the transmission on the TI in step S2230. If no, the UE further determines whether the transmission can be performed on the TO with a reduced number of REs. If yes, the UE in step S2250 performs the transmission with a reduced number of UEs. If no, the UE drops / discards the transmission and/or postpones the transmission to another transmission, e.g. in a next slot, a next available slot, a slot in a subsequent time interval or period, etc.

It is noted that the embodiments relating to a transmission with a reduced number of REs can in principle be applied without configuration of time intervals. However, they may also be combined with any of the formerly described embodiments where a configuration includes a duration of a TI and / or time differences between TIs. For instance, step S1120 of selecting a time resource for the transmission may be performed to select the time resource from all slots within the time interval having a sufficient number of symbols satisfying the minimum number of required REs.

### Notes

The above described embodiments have been described and illustrated by Figures using some examples related to multi-PUSCHs CG. It is however noted that the present disclosure is not limited to multi-PUSCH CG and the embodiments are generally applicable to DG or CG UL and DG or SPS DL and other types of transmissions and signals.

For instance, a direction of the transmission is an uplink direction or a downlink direction.

Moreover, the configuration conveyed by one or more signals may include, for example a dynamic grant (DG), a configured grant (CG), or semi-persistent scheduling (SPS).

As a possible scenario, a TI configured in accordance with the present disclosure can be used to derive the timing of a PDSCH, instead of a PUSCH TO.

Possible scenarios further include, the transmission on the selected TI being an initial transmission or a repetition on a shared channel, a reference signal or a control signal.

For instance, the TIs can be used to determine the timing of PUSCH/PDSCH repetitions (e.g., indicated by a dynamic grant). Alternatively, the TI can be utilized to determine the timing of a TB by a dynamic grant (through a DCI).

Further, a TI can be utilized to determine the timing of SRS or PUCCH transmission occasions (e.g., carrying CQI or SR).

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. For example, a relay node, a network node, and a scheduling device may be considered (each) as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Aspects

According to a first aspect, provided is a communication apparatus comprising: a transceiver which, in operation, receives one or more signals conveying a configuration indicating, for each of one or more time intervals, one or both of a duration and a timing of the time interval; and circuitry which, in operation, selects, for a transmission, a time resource configured with a direction matching a direction of the transmission within the one or more time intervals, wherein the transceiver, in operation, transmits or receives the transmission on the selected time resource.

According to a second aspect, which may be provided in combination with the first aspect, the configuration indicates, for each of the one or more time intervals, the duration of the time interval and, a time difference between the beginnings of consecutive time intervals as an indication of the timing.

According to a third aspect, which may be provided in combination with the first or second aspect, the configuration indicates single duration applicable to all of the one or more time intervals.

According to a fourth aspect, which may be provided with any one of the first to third aspects, the one or more time intervals are a plurality of time intervals including a first time interval and a second time interval, the configuration indicates priorities for the plurality of time intervals, the first time interval having a higher priority and overlapping with the second time interval, and the circuitry, in operation, selects the time resource for the transmission among all available resources within the first time interval before selecting another time resource for another transmission among resources within the second time interval remaining after selection of said time resource within the first time interval.

According to a fifth aspect, which may be provided in combination with any one of the first to fourth aspects, the configuration indicates a subset of time resources among all time resources within the one or more time intervals, and the circuitry, in operation, selects the time resource for the transmission from the subset.

According to a sixth aspect, which may be provided in combination with the first aspect, the configuration indicates, for each two consecutive time intervals of the one or more time intervals, a time difference between the beginnings of the time intervals as an indication of the duration of the preceding time interval.

According to a seventh aspect, which may be provided with any one of the first to sixth aspects, the circuitry, in operation, selects the time resource for the transmission to comprise one or more symbols in a first slot and one or more symbols in a second slot within a time interval of the one or more time intervals.

According to an eighth aspect, which may be provided in combination with any one of the first to seventh aspects, the configuration indicates, for the transmission, at least one of a minimum number or a maximum number of resource elements or symbols available for allocation of the transmission, and the circuitry, in operation, selects a time resource satisfying the at least one of the minimum number or maximum number within the one or more time intervals.

According to a ninth aspect, which may be provided in combination with the eighth aspect, the circuitry, in operation, adapts a modulation and coding scheme or a transport block size to the selected time resource satisfying the indicated minimum number or maximum number of resource elements or symbols.

According to a tenth aspect, which may be provided in combination with any one of the first to ninth aspects, a direction of the transmission is an uplink direction or a downlink direction.

According to an eleventh aspect, which may be provided in combination with any one of the first to tenth aspects, the configuration includes a dynamic grant, a configured grant, or semi-persistent scheduling.

According to a twelfth aspect, which may be provided in combination with any one of the first to eleventh aspects, the transmission is an initial transmission or a repetition on a shared channel, a reference signal or a control signal.

According to a thirteenth aspect, provided is a scheduling node comprising circuitry which, in operation, determines, a configuration indicating, for one or more time intervals, one or both of a duration and a timing of the time interval; and a transceiver which, in operation, transmits one or more signals conveying the configuration and receives or transmits a transmission on a time resource configured with a direction matching a direction of the transmission within the one or more time intervals.

According to a fourteenth aspect, provided is a communication method to be performed by a communication apparatus, comprising the steps of: receiving one or more signals conveying a configuration indicating, for each of one or more time intervals, one or both of a duration and a timing of the time interval; selecting, for a transmission, a time resource configured with a direction matching a direction of the transmission within the one or more time intervals; and transmitting or receiving the transmission on the selected time resource.

According to a fifteenth aspect, provided is a communication method to be performed by a scheduling node comprising the steps of: determining, a configuration indicating, for one or more time intervals, one or both of a duration and a timing of the time interval; transmitting one or more signals conveying the configuration; and receiving or transmitting a transmission on a time resource configured with a direction matching a direction of the transmission within the one or more time intervals.

According to a sixteenth aspect, provided is an integrated circuit which, in operation, causes a communication apparatus to carry out the steps of the communication method according to the fourteenth aspect.

According to a seventeenth aspect, provided is an integrated circuit which, in operation, causes a scheduling node to carry out the steps of the communication method according to the fifteenth aspect.

According to a eighteenth aspect, provided is a program stored on a (non-transitory) storage medium and including code instructions, which, when executed on one or more processors of a communication apparatus, cause the one or more processors to execute the steps the fourteenth aspect.

According to a nineteenth aspect, provided is a program stored on a (non-transitory) storage medium and including code instructions, which, when executed on one or more processors of a scheduling, cause the one or more processors to execute the steps the fifteenth aspect.

## Claims

1. A communication apparatus comprising:
a transceiver which, in operation, receives one or more signals conveying a configuration indicating, for each of one or more time intervals, one or both of a duration and a timing of the time interval; and
circuitry which, in operation, selects, for a transmission, a time resource configured with a direction matching a direction of the transmission within the one or more time intervals,
wherein the transceiver, in operation, transmits or receives the transmission on the selected time resource.

2. The communication apparatus according to claim 1, wherein the configuration indicates, for each of the one or more time intervals, the duration of the time interval and, a time difference between the beginnings of consecutive time intervals as an indication of the timing.

3. The communication apparatus according to claim 1 or 2, wherein the configuration indicates single duration applicable to all of the one or more time intervals.

4. The communication apparatus according to any one of claims 1 to 3, wherein the one or more time intervals are a plurality of time intervals including a first time interval and a second time interval, the configuration indicates priorities for the plurality of time intervals, the first time interval having a higher priority and overlapping with the second time interval, and the circuitry, in operation, selects the time resource for the transmission among all available resources within the first time interval before selecting another time resource for another transmission among resources within the second time interval remaining after selection of said time resource within the first time interval.

5. The communication apparatus according to any one of claims 1 to 4, wherein the configuration indicates a subset of time resources among all time resources within the one or more time intervals, and the circuitry, in operation, selects the time resource for the transmission from the subset.

6. The communication apparatus according to claim 1, wherein the configuration indicates, for each two consecutive time intervals of the one or more time intervals, a time difference between the beginnings of the time intervals as an indication of the duration of the preceding time interval.

7. The communication apparatus according to any one of claims 1 to 6, wherein the circuitry, in operation, selects the time resource for the transmission to comprise one or more symbols in a first slot and one or more symbols in a second slot within a time interval of the one or more time intervals.

8. The communication apparatus according to any one of claims 1 to 7, wherein the configuration indicates, for the transmission, at least one of a minimum number or a maximum number of resource elements or symbols available for allocation of the transmission, and the circuitry, in operation, selects a time resource satisfying the at least one of the minimum number or maximum number within the one or more time intervals.

9. The communication apparatus according to claim 8, wherein the circuitry, in operation, adapts a modulation and coding scheme or a transport block size to the selected time resource satisfying the indicated minimum number or maximum number of resource elements or symbols.

10. The communication apparatus according to any one of claims 1 to 9, wherein a direction of the transmission is an uplink direction or a downlink direction.

11. The communication apparatus according to any one of claims 1 to 10, wherein the configuration includes a dynamic grant, a configured grant, or semi-persistent scheduling.

12. The communication apparatus according to any one of claims 1 to 11, wherein the transmission is an initial transmission or a repetition on a shared channel, a reference signal or a control signal.

13. A scheduling node comprising:
circuitry which, in operation, determines, a configuration indicating, for one or more time intervals, one or both of a duration and a timing of the time interval; and
a transceiver which, in operation, transmits one or more signals conveying the configuration and receives or transmits a transmission on a time resource configured with a direction matching a direction of the transmission within the one or more time intervals.

14. A communication method to be performed by a communication apparatus, comprising the steps of:
receiving one or more signals conveying a configuration indicating, for each of one or more time intervals, one or both of a duration and a timing of the time interval;
selecting, for a transmission, a time resource configured with a direction matching a direction of the transmission within the one or more time intervals; and
transmitting or receiving the transmission on the selected time resource.

15. A communication method to be performed by a scheduling node comprising the steps of:
determining, a configuration indicating, for one or more time intervals, one or both of a duration and a timing of the time interval;
transmitting one or more signals conveying the configuration; and
receiving or transmitting a transmission on a time resource configured with a direction matching a direction of the transmission within the one or more time intervals.
